# EUROPEAN PATENT SPECIFICATION

(11) **EP 2 374 603 B1**
(45) Date of publication and mention of the grant of the patent: **23.07.2014**
(21) Application number: 11158904.0
(22) Date of filing: 18.03.2011
(51) Int. Cl.: B29C 63/42, B65C 3/06, B65D 23/08

(54) **Method for applying a shrinkable tubular sleeve on a container, particularly on a bottle**
Verfahren zum Anbringen einer schrumpfbaren rohrförmigen Hülse auf einem Container, insbesondere auf einer Flasche
Procédé pour disposer un manchon tubulaire rétractable sur un récipient, particulièrement sur une bouteille

(30) Priority: 06.04.2010 IT TO20100261
(43) Date of publication of application: 12.10.2011
(73) Proprietor: Soremartec S.A., 6700 Arlon (BE); Ferrero S.p.A., 12051 Alba (Cuneo) (IT); Ferrero Offene Handelsgesellschaft m.b.H., 35260 Stadtallendorf (DE)
(72) Inventor: Terrasi, Giuseppe, 12050 Benevello (Cuneo) (IT)
(74) Representative: Bosotti, Luciano

(56) References cited:
- EP-A1- 2 186 734
- WO-A1-2005/123518
- DE-A1- 19 547 697
- DE-A1-102007 029 296
- DE-B3-102007 029 315

## Description

### Technical field

The description relates to production methods for containers.

The description has been developed with particular attention paid to the possible application to containers that comprise a containment body with a mouth or neck part (hence containers such as bottles, flasks, jars, and the like) that can be used for bottling foodstuff products, such as for example beverages. The field of application of the description is not, however, limited to this specific context of application.

### Description of the related art

For some time now there have been widely used for bottling or packaging products of various nature (beverages, detergents, both in liquid form and in granular form or, in general, flowable form) containers, which comprise a containment body with a mouth or neck part that can be reclosed with a top or lid and in which the container carries applied thereon a tubular sleeve of film material shrunk on the container. In various known solutions, the sleeve in question is formed by a film of heat-shrinkable material. The sleeve thus fitted on the container is then exposed to a source of heat. The heat brings about radial shrinkage or contraction of the sleeve; consequently, between the sleeve and the container a stable shape fit is obtained such as to cause the sleeve to be fixedly anchored on the container.

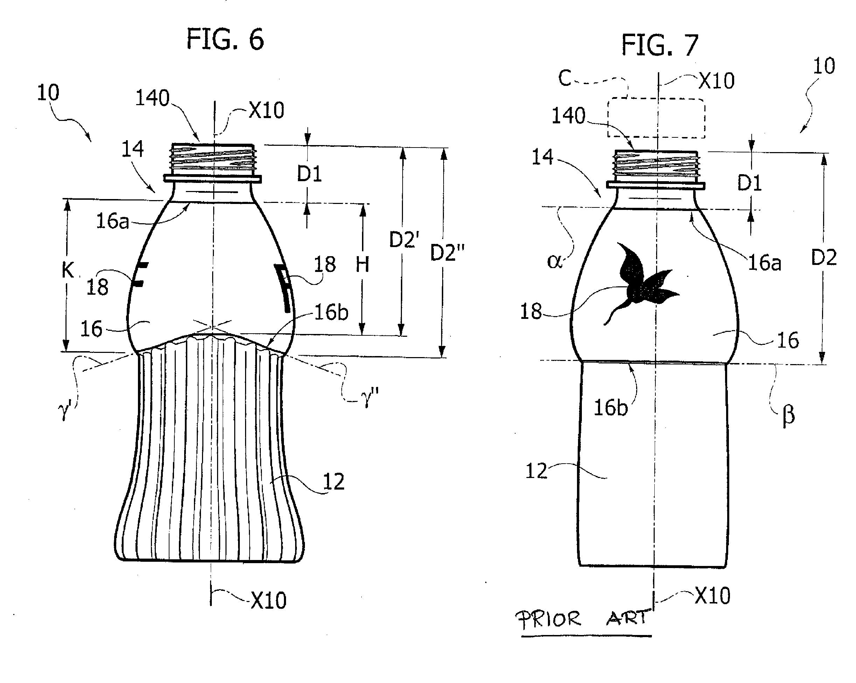

Figure 7 of the annexed drawings is a schematic illustration of a container of the above sort, designated as a whole by 10. In the solution illustrated by way of example in Figure 7, the container 10 (which may, for example, be made of a material such as glass or moulded plastic) has a main axis of extension X10 and comprises a containment part or body 12 with a mouth or neck part 14. The part 14 terminates in a mouth portion, which is, for example, threaded and enables closing of the container 10 with a top or lid. The mouth or neck part 14 terminates with a mouth or opening, which extends along a path that is as a whole circular - for example, smooth or possibly indented - lying in a mouth plane 140 oriented in a direction transverse with respect to the main axis X10.

The sleeve, designated by 16, usually bears graphics 18 (for example, figures and/or wordings of various nature, which represent the product contained in the container 10).

Figure 7 highlights the fact that, even though the sleeve 16 does not necessarily have a cylindrical shape (in the example illustrated it has in fact an as a whole ogival shape), it has two end edges 16a, 16b which extend along circular paths lying in two respective planes, α and β, which are transverse (orthogonal) with respect to the main axis X10 of the container 10. In other words, the two end edges 16a, 16b illustrated in Figure 7 extend along paths having, throughout their circular development, a constant distance (D1 for the edge 16a and D2 for the edge 16b) from the mouth plane 140.

A substantially similar container is known, for instance, from WO 2005/123518 A1 or DE 195 47 607 A1.

### Object and summary of the invention

The inventors have noted that containers such as the container described previously present limitations of various nature.

For example, the fact that the end edges of the sleeve extend along circular paths, lying in planes transverse with respect to the main axis of the container (i.e., at a constant distance from the mouth plane) limits the creative possibilities linked to the development of the sleeve and/or of the graphics present thereon. This applies also in the case where part of the sleeve is left transparent so that it is possible to see an underlying portion of container through the sleeve.

Again, a sleeve like the one considered previously is suited to being fitted on the container according to any spatial orientation. This applies both in the case where the container presents a complete symmetry of rotation (for example, because it is cylindrical) and in the case where the container has a prismatic structure (for example, with hexagonal cross section) or a squeezed structure. In the latter case, wordings or figures appearing on the sleeve that ought to correspond to the main faces of the squeezed body end up being shifted/rotated and hence not readily visible/readable by whoever looks at the container to see what appears on one of the main faces of the flattened body. Substantially similar problems may arise, for example, when the container is set, together with other containers, in a transparent pack or a pack with window in conditions where it would be desirable for the containers set alongside one another to present all the respective graphics of the sleeve in the same spatial position, and not distributed in a disorderly way from container to container.

There is hence felt the need to provide a solution capable of overcoming the aforesaid drawbacks. The object of the invention is to provide a solution of the above sort, starting from the solution disclosed in EP 2 186 734 A1, which forms part of the prior art under the provisions of Art. 54(3) EPC.

According to the invention, the above object is achieved thanks to a method having the characteristics recalled specifically in claim 1.

The claims form an integral part of the technical teaching provided herein in relation to the invention.

### Brief description of the annexed drawings

The invention will now be described, with reference to the annexed drawings, wherein:
- Figures 1 to 4 represent successive steps of a method according to one embodiment, Figure 4 being a view according to the line IV-IV of Figure 3;
- Figures 5 and 6 illustrate the characteristics of a container adopted to be produced according to embodiments; and
- Figure 7 has already been described previously.

### Detailed description of embodiments

In the ensuing description various specific details are illustrated aimed at an in-depth understanding of the embodiments. The embodiments may be provided without one or more of the specific details, or with other methods, components, materials, etc. In other cases, known structures, materials, or operations are not shown or described in detail in order not to obscure various aspects of the embodiments.

The reference to "an embodiment" or "one embodiment" in the framework of the present description indicates that a particular configuration, structure, or characteristic described in relation to the embodiment is comprised in at least one embodiment. Hence, phrases such as "in an embodiment" or "in one embodiment" that may be present in different points of this description do not necessarily refer to one and the same embodiment. In addition, particular conformations, structures, or characteristics may be combined in any adequate way in one or more embodiments.

The references used herein are provided merely for convenience and hence do not define the sphere of protection or the scope of the embodiments.

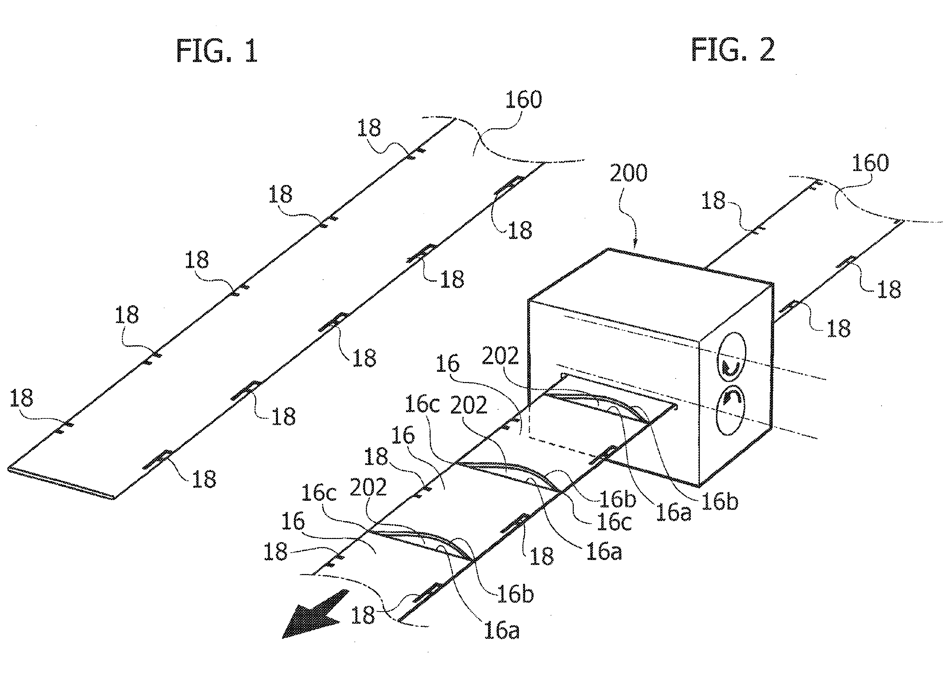

Figures 1 and 2 illustrate two of the steps of production of sleeves 16 designed to be applied on a container 10 corresponding in general terms, except where otherwise indicated, to the solution already considered previously with reference to Figure 7.

In the sequel of the present description, elements, parts, and components that are identical or equivalent to elements, parts, and components already described previously in relation to Figure 7 will consequently be designated by the same reference numbers; for brevity, the corresponding description will not be repeated.

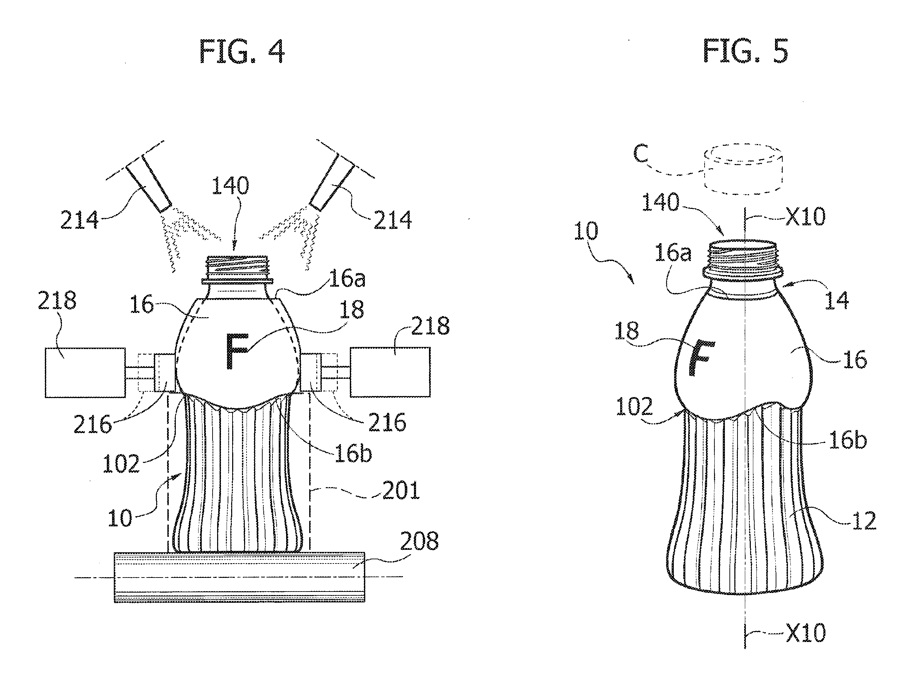

In particular, the sleeves 16 illustrated in Figure 2, as likewise the material from which they are obtained, bear (obtained according to known criteria) graphics 18, here represented by way of example in the form of two letters "F" designed to appear on opposite faces of the sleeve 16, as may be seen in Figures 5 and 6.

The sleeves 16 are obtained starting from a shrinkable-film material, such as for example, heat-shrinkable material. In the sequel of the present description reference will be made for simplicity to use of a heat-shrinkable material. Comprised, on the other hand, within the scope of the description is the use of shrinkable materials the shrinking characteristics of which, used for purposes of application of the sleeves 16, are achieved with different criteria, for example by photoshrinkage.

Heat-shrinkable materials that can be used to produce the sleeves 16 are, for example, films of PET, OPS (oriented polystyrene), or PVC.

In various embodiments, the heat-shrinking characteristics are obtained by subjecting a film material of this type to a uni-axial or bi-axial stretching with subsequent controlled cooling. Following upon cooling, the film material preserves the extended condition but, when it is then exposed to a source of heat, the effect of heating gives rise to a sort of "shape memory" mechanism such as to cause the film material to shrink towards the original non-extended condition that it had before undergoing stretching.

All this corresponds to principles and criteria of production known in the art so that a more detailed description herein would be superfluous.

In various embodiments, a film material of this sort is initially produced in a semi-finished tubular length 160. In various embodiments, by operating according to known criteria, the semi-finished tubular length 160 is obtained by folding in a V a web body, which is then reclosed to form a tube by gluing on one another the distal edges of the configuration folded in a V.

The semi-finished tubular length 160 in the form of web is fed to a cutting station 200 designed to subject the semi-finished tubular length 160 itself to an operation of segmentation, which leads to formation of a chain of sleeves 16 designed to be then applied on successive containers 10.

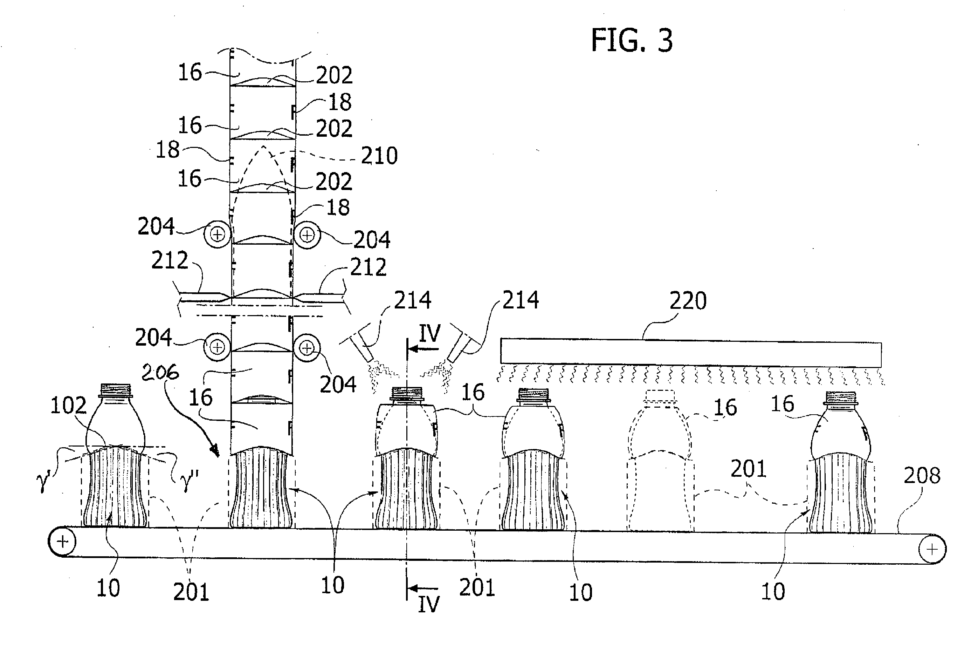

The cutting station 200 can be provided in the form of a dinking machine of the type with counter-rotating rotary cutting roller and counter-roller (or anvil), which is able to subject the semi-finished tubular length 160 to an operation of providing slits obtained by cutting away of the area of the slits, with consequent segmentation in successive sleeves 16 produced in such a way as not to interrupt the continuity of the material of the semi-finished tubular length 160. In other words (as shown schematically in Figure 2), the sleeves 16 leaving the cutting station 200 are still connected together in a chain and can hence be fed to the station where they are applied on the containers 10 (see Figure 3) preserving a general continuous-web structure.

In various embodiments, this result can be obtained by causing the dinking machine 200 to carry out on the semi-finished tubular length of shrinkable material 160 an operation of formation of slits with a pitch corresponding to the height of the sleeves 16. In various embodiments, the dinking machine 200 forms in the semi-finished tubular length 160 openings or slits 202, which, in the example of embodiment illustrated herein, assume a shape that can be roughly defined as "eyelid shape". Hence, they are openings or windows delimited, on one side, by a rectilinear cut and, on the opposite side, by an arched cut.

It may be readily understood that the cuts 16a and 16b are designed to form in each sleeve 16 the homologous end edges designated precisely by 16a and 16b in Figures 5 and 6: this explains why said references appear also in Figure 2. Viewing together Figure 2 and Figures 5 and 6 it may likewise be appreciated that the cutting operation carried out in the station 200 is performed "in phase" with the graphics 18, in such a way that each sleeve 16 presents the graphics 18 in a pre-set position with respect to its end edges 16a and 16b.

The sleeves 16 that leave the cutting unit 200 are, however, by now connected together in a chain at end connecting portions 16c, which are not involved in the cutting action performed in the station 200.

These modes of formation and treatment (cutting/dinking) of the semi-finished tubular length 160 mean that both the semi-finished tubular length 160 and the chain of sleeves 16, which is formed starting from the semi-finished tubular length 160, albeit having a tubular structure, present as web-like bodies that can be wound on reels. Both the semi-finished tubular length 160 and the chain of sleeves 16 can hence be produced at times and in places different from when and where they are subsequently used.

Passing now to an examination of Figure 3, in the example of embodiment considered here, it is assumed that the chain of sleeves 16 is dropped from above downwards (thanks to the drawing action obtained, for example, via opposed motor-driven rollers 204) towards a station of application on the containers 10, designated as a whole by 206.

The sleeves 16 are designed to be fitted on the individual container 10 on the top part, i.e., in a position corresponding or adjacent to the mouth or neck part 14.

To fit the sleeves 16 on the containers 10, which - once again with reference to the example considered in Figure 3 - are assumed to advance from left to right moved by a conveyor 208 (for example, by a motor-driven belt conveyor, a worm conveyor, a carousel, or a starwheel), they are at least in part opened out starting from the flattened condition of formation. The action of opening-out is carried out by causing the chain of the sleeves 16 to drop on an opening device 210, which can have, for example, a circular cross section, which penetrates (obviously, the movement involved is a relative movement, in so far as it is here assumed that the chain of sleeves 16 drops from above downwards, with the body 210 held in a fixed position) within the cavity of the tubular structure of the sleeves 16, bringing about gradual opening out thereof.

The motor-driven rollers 204 hence draw the chain of sleeves 16 from above downwards causing it to drop on the opening device 210. At the bottom end of the opening device 210 each individual sleeve 16 is thus opened out to form a cylinder and subjected to the action of cutting means 212 (for example with rotary-disk blade) designed to cut the connecting portions 16c. The sleeve 16, thus separated from the web-like chain of which it previously formed part, assumes the nature of single body, independent of the chain from which it is formed, and is then further drawn along by the rollers 204 so as to be transferred and fitted on a respective container 10 arriving (from left to right, as viewed in Figure 3) on the conveyor 208.

In various embodiments, the containers 10 can advance towards the area where transfer of the sleeves 16 inserted in respective tubular templates 201 (represented dashed in Figure 3) is envisaged, each of which has a top edge having a profile complementary to the profile of the edge 16b of the sleeve 16.

In practice, the top edge of the template 201 serves as rest for the sleeve 16, thus preventing the latter from slipping in an uncontrolled way on the container 10.

In various embodiments, the movement of descent of the sleeves 16 and the movement of advance of the containers 10 towards the station 206 occurs continuously, without any stops, there being envisaged an electronic synchronization between the rollers 204 that fit the sleeves on the containers 10 and the conveyor 208 that conveys the containers 10. The provision of synchronizations of this type is well known in the automatic-packaging sector, and renders any further more detailed description superfluous herein.

Whatever the solution adopted, from an observation of the bottom left part of Figure 3 it may be appreciated that the containers 10 are fed with a given orientation.

In particular, from Figures 5 and 6 (this aspect will be further treated in what follows) it may be appreciated that the sleeves 16 (see in particular Figures 5 and 6) have:
- a top edge 16a, which - as in the case of the container 10 represented in Figure 7 - extends according to a plane circular path, lying in a plane α, which is a plane transverse (orthogonal) to the main axis X10 of the container so that the edge 16a has, throughout its circular development, a constant distance D1 with respect to the mouth plane 140; and
- a bottom edge 16b, which - unlike what has been seen for the container 10 represented in Figure 7 - extends according to an annular path that is not plane, but, so to speak, wavy and consequently comprises a number of stretches that extend in planes γ', γ" that are oblique, i.e., inclined (such as to form a dihedron) with respect to the family of the transverse planes orthogonal to the main axis X10 of the container so that the edge 16b has, in different points of its angular development about the axis X10, different distances from the mouth plane 140 that range from a minimum value D2' to a maximum value D2".

In various embodiments, the edge 16b can extend according to a generally annular path, which lies not in a plane, as in the case of the planet β of Figure 7, but rather in an arched surface of lie that, albeit remaining as a whole transverse with respect to the axis X10, has a general tile profile.

In various embodiments, instead of having a height (i.e., a dimension measured in the direction of the axis X10) that is practically constant (as in the case of Figure 7), the edges have a height that ranges between a minimum value and a maximum value, which are designated by H and K in Figure 6.

It will be appreciated that, in various embodiments, the same general idea can be implemented according to different modes, for example:
- what has been said for the edge 16b can apply, additionally or alternatively, to the top edge 16a;
- instead of the wavy profile illustrated herein, with two maxima and two minima (that is, with two diametrally opposed lobes so that the sleeve 16 has a general "shawl" conformation), one or both of the edges 16a, 16b of the sleeve 16 could present, in different points of their angular development, different distances from the mouth plane 140 for the sole fact that they lie on a plane surface set oblique with respect to the main axis X10, so as to present a minimum and maximum distance from the mouth plane 140 in two diametrally opposite positions;
- in various embodiments the edge 16b and/or the edge 16a could have a wavy profile with a number of maxima and minima higher than two.

As will be appreciated more clearly from Figure 5 (but also from Figures 3 and 4), in various embodiments the container 10 has a sculptured annular edge 102 (which is projecting, in the examples of embodiment illustrated herein, but in various embodiments could be recessed with respect to the external development of the body 10), which extends about the axis X10 according to a path that is homologous (and hence such as to reproduce) the path of the edge 16b of the sleeve 16.

In various embodiments, the container 10 can present a sculptured annular edge 102 that is partly projecting and partly recessed with respect to the external development of the body 10.

The considerations made previously in relation to the path of the edge 16b (and possibly of the edge 16a) hence identically apply to the path of the sculptured annular edge 102.

For example, with reference to Figure 5, it may be appreciated that the container 10 has, delimited at the bottom by the edge 102, a top part (on which the sleeve 16 is to be applied), at least slightly projecting with respect to the overall development of the container 10. Also this slightly projecting part has a variable height, such as to assume a maximum value in the diametrally opposite angular positions where the graphics 18 appears (the letter F, in the simplified example adopted here) and a minimum value in two angular positions staggered by 90°. The sleeve 16, and the part of the container 10 on which the latter is applied hence have, in the examples of embodiment illustrated here, complementary edges 16b and 102 both with a lobed profile or a wavy profile with two maxima and two minima.

In the example of embodiment referred to in Figure 3, the containers 10 are made to advance on the conveyor 208 controlling the orientation thereof about the main axis X10, in particular causing the two angular positions where the slightly projecting part of container that is to be covered by the sleeve 16 is "higher" to be set in a front and rear position, hence aligned with the direction of advance of the container, whilst the two angular positions where the part of container that is to be covered by the sleeve 16 is "lower" is located are oriented sideways on, crosswise with respect to the direction of advance of the container.

In this way, the sleeves 16 are fitted on the containers 10 in such a way that the orientation of the sleeve 16 about the main axis X10 of the respective container 10 is not random but controlled: the two portions where the individual sleeve 16 is higher (i.e., where the cutting devices 212 cut the connecting portions 16c) come to coincide exactly with the angular positions where the part of the container 10 delimited at the bottom by the sculptured annular edge 102 is at the maximum height. In this way, the bottom edge 16b of the individual sleeve 16 is in fact brought to mate with the sculptured annular edge 102.

This mode of operation causes the graphics (for example, the letter F) obtained - in a given and controlled position - on each sleeve 16 to occupy a precise and definite position with respect to the sculptured annular edge 102 and hence to the container 10 as a whole. For example (with reference for simplicity to the views of Figures 5 and 6), the letters F designated by 18, and provided where the sleeve 16 has the maximum height (value K represented in Figure 6), are located exactly in the desired angular position, where the part of the container 10 delimited at the bottom by the edge 102 has the maximum height.

Once the sleeve 16 is fitted on the container 10 (and rests with its bottom edge 16b on the template 201) the movement of advance of the container 10 brings the sleeve 16 to be exposed to sources of heat 214 (for example jets of hot air or lamps), which bring about an at least partial initial shrinking of the sleeve 16.

Meanwhile, as shown schematically in Figure 4, the sleeve 16 itself is kept stationary on the container 10 in so far as it rests at the bottom on the template 201 and/or in so far as it is withheld by retention elements constituted, for example, by grippers or pressure elements 216 moved by actuators 218, for instance of a fluid type.

The elements 216 can be made to advance selectively towards the container 10 so as to keep the sleeve 16 fitted on the container 10 stationary for a sufficient time to cause the sleeve 16, which is starting to shrink, to anchor on the container 10 and not to shift any longer even though the shrinkage process is not yet complete.

In this regard it will be appreciated that:
- in various embodiments, mere resting on the template 201 is sufficient to cause the sleeve 16 to be kept stationary on the container 10 during the step of pre-shrinkage of the sleeve 16 so that it is possible to do without the retention elements 216;
- in various embodiments, recourse to the templates 201 may not be envisaged in so far as the correctness of the position with which the sleeves 16 are fitted on the containers 10 is ensured with other means, or else it may be envisaged that the templates are removed immediately after the sleeves 16 have been fitted on the containers 10: in these cases, the sleeve 16 is kept stationary on the container 10 during the step of pre-shrinkage by the retention elements 216 alone;
- in various embodiments, as represented in Figure 4, the sleeve 16 is kept stationary on the container 10 during the step of pre-shrinkage both by being rested on the template 201 and by the retention elements 216.

In this regard, it will once again be noted that, in the case of containers where the sculptured annular edge 102, instead of being at least slightly projecting, as in the example considered here, is a recessed edge, the function of support for resting of the bottom edge 16b of the sleeve 16 can be performed (both when the sleeve is fitted on the container and during the pre-shrinkage step) by the sculptured annular edge 102, avoiding the need to resort to the template 201.

Once the sleeve 16 no longer runs the risk of being shifted accidentally, the container 10 with the sleeve 16 fitted thereon can be sent on to a shrinking station 220. In various embodiments, a station of this type can be constituted, for example, by a shrinking oven (for instance, of the steam or hot-air type), through which the containers 10 are fed for a time sufficient to cause the process of shrinking of the sleeves 16 to be completed leading to complete shape fit of the sleeve 16 on the part of the container 10 on which it has been applied, i.e., until the conditions represented in Figures 5 and 6 are obtained.

The templates 201 (if envisaged) can be removed either upstream or downstream of the shrinking station 220.

The containers thus completed, filled and topped, can be sent on to the subsequent treatment operations such as, for example, boxing.

From an observation of the figures it may be appreciated that various embodiments enable solution of the problem of applying on the container 10 a tubular sleeve 16 overcoming the limitations present in a solution such as the one illustrated in Figure 7 where the end edges 16a and 16b of the sleeve 16 lie in planes α and β orthogonal with respect to the main axis X10 of the container, at constant distances D1, D2 from the mouth plane 140.

In addition to enabling greater margins of freedom in the provision of the graphics 18, various embodiments make it also possible to ensure an exact orientation of said graphics with respect to the container 10, thus enabling a desired exact orientation of the graphics to be obtained both in packaging conditions and in conditions of display of the container 10 and of the product contained therein.

## Claims

1. A method of producing containers (10) including a containment body (12) with a main axis (X10) and a mouth or neck portion (14) defining a mouth plane (140) of the container extending crosswise said main axis (X10), with a tubular sleeve (16) of a film material applied on at least part of the container (10) and shrunk on the container (10), the method including forming said tubular sleeves (16) with at least one end edge (16b) which, with the sleeve (16) applied and shrunk on the container (10) has, at different points of its angular development around said main axis (x10), different distances (D2', D2") with respect to said mouth plane (140),
the method including the following steps:
- forming a tubular blank (160) of a shrinkable film material, and
- forming said tubular sleeves (16) by segmenting (200) said tubular blank (160) by providing, in each sleeve (16) thus formed, said at least one end edge (16b), and
- applying (206) said sleeves (16) onto said containers (10) by controlling the orientation of the sleeves (16) with respect to the main axis (X10) of the containers (10).

2. The method of claim 1, including:
- providing in said containers (10) at least an annular sculptured edge (102) having, at different points of its angular development around said main axis (x10), different distances with respect to said mouth plane (140) with a trajectory homologous to the trajectory of said at least one end edge (16b) of said tubular sleeves (16), and
- applying said sleeves (16) onto said containers (10) by bringing said at least one end edge (16b) to coincide with said at least one sculptured edge (102) of the container (10) having a homologous trajectory.

3. The method of claim 1, including:
- forming said tubular blank (160) in the form of a web,
- forming said tubular sleeves (16) by segmenting (200) said web-like tubular blank (160), and
- opening out (210) said tubular sleeves (16) to apply them onto said containers (10) preferably by means of a relative movement (204) of the sleeves (16) with respect to an opener member (210).

4. The method of claim 1 or claim 3, including:
- forming said tubular sleeves (16) by segmenting (200) said tubular blank (160) by leaving connecting formations (16c) between adjacent sleeves, whereby the sleeves (16) thus formed constitute a chain of sleeves (16) connected to each other,
- feeding said chain of sleeves (16) towards the containers (10) onto which the sleeves (16) are applied.

5. The method of claim 4, including separating said tubular sleeves (16) by rupturing (212) said connection formations (16c) before the sleeves (16) are applied onto the containers (10).

6. The method of any of the previous claims, including coupling templates (201) to said containers (10), said templates (201) forming a support surface for the sleeves (16) applied onto said containers (10).

7. The method of any of the previous claims, wherein applying said sleeves (16) onto said containers (10) by controlling (206) the orientation of the sleeves (16) with respect to the main axis (X10) of the containers (10) includes advancing said sleeves (16) and said containers (10) towards a zone (206) where the sleeves (16) are applied onto the containers (10) by maintaining a pre-determined relative orientation of said sleeves (16) and said containers (10).

8. The method of any of the previous claims, including:
- retaining by retaining means (216, 218) the sleeves (16) applied onto respective containers (10) while subjecting them to a first shrinking step (214) to couple the sleeves (16) onto respective containers (10) , and
- completing shrinking of the sleeves (16) coupled to the respective containers (10) as a result of said first shrinking step (214) after releasing the sleeves (16) from said retaining means (216, 218).

9. The method of any of the previous claims, wherein said film material is a heat-shrinkable material.

## Patentansprüche

1. Verfahren zum Herstellen von Behältern (10), die einen Behälterkörper (12) mit einer Hauptachse (X10) und einen Mündungs- oder Haltabschnitt (14) aufweisen, der eine Mündungsebene (140) des Behälters definiert, die sich quer zu der Hauptachse (X10) erstreckt, mit einer rohrförmigen Hülse (16) eines Folienmaterials, die bei zumindest einem Teil des Behälters (10) angebracht und auf den Behälter (10) aufgeschrumpft ist, wobei das Verfahren umfasst:
Ausbilden der rohrförmigen Hülsen (16) mit mindestens einer Endkante (16b), welche, wenn die Hülse (16) auf dem Behälter (10) angebracht und aufgeschrumpft ist, bei unterschiedlichen Punkten ihrer Winkelerstreckung um die Hauptachse (X10) unterschiedliche Abstände (D2', D2") in Bezug auf die Mündungsebene (140) aufweist,
wobei das Verfahren die folgenden Schritte umfasst:
- Ausbilden eines rohrförmigen Rohlings (160) eines schrumpfbaren Folienmaterials, und
- Ausbilden der rohrförmigen Hülsen (16), indem der rohrförmige Rohling (160) segmentiert (200) wird, indem in jeder so ausgebildeten Hülse (16) die mindestens eine Endkante (16b) bereitgestellt wird, und
- Anbringen (206) der Hülsen (16) auf die Behälter (10), indem die Orientierung der Hülsen (16) in Bezug auf die Hauptachse (X10) der Behälter (10) gesteuert wird.

2. Verfahren nach Anspruch 1, das umfasst:
- Bereitstellen in den Behältern (10) von mindestens einer ringförmig gestalteten Kante (102), die bei verschiedenen Punkten ihrer Winkelerstreckung um die Hauptachse (X10) unterschiedliche Abstände in Bezug auf die Mündungsebene (140) aufweist, mit einer Erstreckungsbahn, die zu der Erstreckungsbahn der mindestens einen Endkante (16b) der ringförmigen Hülsen (16) homolog ist, und
- Anbringen der Hülsen (16) auf die Behälter (10), indem die mindestens eine Endkante (16b) dazu gebracht wird, mit der mindestens einen gestalteten Kante (102) des Behälters (10) mit einer homologen Erstreckungsbahn zusammenzufallen.

3. Verfahren nach Anspruch 1, das umfasst:
- Ausbilden des rohrförmigen Rohlings (160) in der Form eines Netzes,
- Ausbilden der rohrförmigen Hülsen (16), indem der netzartige rohrförmige Rohling (160) segmentiert (200) wird, und
- Aufweiten (210) der rohrförmigen Hülsen (16), um sie an den Behältern (10) anzubringen, vorzugsweise mittels einer Relativbewegung (204) der Hülsen (16) in Bezug auf ein Öffnungselement (210).

4. Verfahren nach Anspruch 1 oder Anspruch 3, das umfasst:
- Ausbilden der rohrförmigen Hülsen (16), indem der rohrförmige Rohling (160) segmentiert (200) wird, indem Verbindungsformationen (16c) zwischen benachbarten Hülsen gelassen werden, wodurch die so ausgebildeten Hülsen (16) eine Kette an miteinander verbundenen Hülsen (16) bilden,
- Zuführen der Kette an Hülsen (16) in Richtung der Behälter (10), auf welche die Hülsen (16) angebracht werden.

5. Verfahren nach Anspruch 4, das umfasst:
Trennen der rohrförmigen Hülsen (16), indem die Verbindungsformationen (16c) aufgebrochen werden (212), bevor die Hülsen (16) an den Behältern (10) angebracht werden.

6. Verfahren nach einem der vorstehenden Ansprüche, das umfasst:
Verbinden von Matrizen (201) mit den Behältern (10), wobei die Matrizen (201) eine Lagerfläche für die auf die Behälter (10) angebrachten Hülsen (16) bilden.

7. Verfahren nach einem der vorstehenden Ansprüche, bei dem das Anbringen der Hülsen (16) auf die Behälter (10), indem die Orientierung der Hülsen (16) in Bezug auf die Hauptachse (X10) der Behälter (10) gesteuert (206) wird, ein Vorrücken der Hülsen (16) und der Behälter (10) in Richtung einer Zone (206) einschließt, bei welcher die Hülsen (16) auf die Behälter (10) angebracht werden, indem eine vorgegebene Relativorientierung der Hülsen (16) und der Behälter (10) aufrechterhalten wird.

8. Verfahren nach einem der vorstehenden Ansprüche, das umfasst:
- Halten mittels eines Haltemittels (216, 218) der auf die jeweiligen Behälter (10) angebrachten Hülsen (16), während sie einem ersten Schrumpfschritt (214) zum Verbinden der Hülsen (16) mit jeweiligen Behältern (10) unterworfen werden, und
- Vollenden des Aufschrumpfens der als ein Ergebnis des ersten Schrumpfschritts (214) mit den jeweiligen Behältern (10) verbundenen Hülsen (16), nachdem die Hülsen (16) von dem Haltemittel (216, 218) freigegeben wurden.

9. Verfahren nach einem der vorstehenden Ansprüche, bei dem das Folienmaterial ein wärmeschrumpffähiges Material ist.

## Revendications

1. Procédé de production de récipients (10) comprenant un corps de confinement (12) présentant un axe principal (X10) et une partie embouchure ou col (14) définissant un plan d'embouchure (140) du récipient s'étendant transversalement audit axe principal (X10), un manchon tubulaire (16) d'un matériau film étant appliqué sur au moins une partie du récipient (10) et rétréci sur le récipient (10), le procédé comprenant l'étape consistant à doter lesdits manchons tubulaires (16) d'au moins un bord d'extrémité (16b) qui, avec le manchon (16) appliqué et rétréci sur le récipient (10), comporte, en différents points de son développement angulaire autour dudit axe principal (X10), des distances différentes (D2', D2") par rapport audit plan d'embouchure (140),
le procédé comprenant les étapes suivantes consistant à :
- former une ébauche tubulaire (160) d'un matériau film rétrécissable, et
- former lesdits manchons tubulaires (16) par segmentation (200) de ladite ébauche tubulaire (160) en fournissant, dans chaque manchon (16) ainsi formé, ledit au moins un bord d'extrémité (16b), et
- appliquer (206) lesdits manchons (16) sur lesdits récipients (10) en contrôlant l'orientation des manchons (16) par rapport à l'axe principal (X10) des récipients (10).

2. Procédé selon la revendication 1, comprenant les étapes consistant à :
- prévoir, dans lesdits récipients (10), au moins un bord sculpté annulaire (102) comportant, en différents points de son développement angulaire autour dudit axe principal (X10), des distances différentes par rapport audit plan d'embouchure (140) avec une trajectoire homologue de la trajectoire dudit au moins un bord d'extrémité (16b) desdits manchons tubulaires (16), et
- appliquer lesdits manchons (16) sur lesdits récipients (10) en amenant ledit au moins un bord d'extrémité (16b) à coïncider avec ledit au moins un bord sculpté (102) du récipient (10) ayant une trajectoire homologue.

3. Procédé selon la revendication 1, comprenant les étapes consistant à :
- former ladite ébauche tubulaire (160) en une bande,
- former lesdits manchons tubulaires (16) par segmentation (200) de ladite ébauche tubulaire (160) analogue à une bande, et
- ouvrir (210) lesdits manchons tubulaires (16) pour les appliquer sur lesdits récipients (10), de préférence au moyen d'un mouvement relatif (204) des manchons (16) par rapport à un organe d'ouverture (210).

4. Procédé selon la revendication 1 ou la revendication 3, comprenant les étapes consistant à :
- former lesdits manchons tubulaires (16) par segmentation (200) de ladite ébauche tubulaire (160) en laissant des structures de connexion (16c) entre des manchons adjacents, les manchons (16) ainsi formés constituant une chaîne de manchons (16) reliés les uns aux autres,
- distribuer ladite chaîne de manchons (16) vers les récipients (10) sur lesquels les manchons (16) sont appliqués.

5. Procédé selon la revendication 4, comprenant la séparation desdits manchons tubulaires (16) par rupture (212) desdites structures de connexion (16c) avant que les manchons (16) ne soient appliqués sur les récipients (10).

6. Procédé selon l'une quelconque des revendications précédentes, comprenant l'accouplement de gabarits (201) auxdits récipients (10), lesdits gabarits (201) formant une surface de support pour les manchons (16) appliqués sur lesdits récipients (10).

7. Procédé selon l'une quelconque des revendications précédentes, dans lequel l'application desdits manchons (16) sur lesdits récipients (10) en contrôlant (206) l'orientation des manchons (16) par rapport à l'axe principal (X10) des récipients (10) comprend l'avancée desdits manchons (16) et desdits récipients (10) vers une zone (206) dans laquelle les manchons (16) sont appliqués sur les récipients (10) en maintenant une orientation relative prédéterminée desdits manchons (16) et desdits récipients (10).

8. Procédé selon l'une quelconque des revendications précédentes, comprenant les étapes consistant à :
- retenir par des moyens de retenue (216, 218) les manchons (16) appliqués sur les récipients (10) respectifs tout en les soumettant à une première étape de rétrécissement (214) pour accoupler les manchons (16) sur les récipients (10) respectifs, et
- achever le rétrécissement des manchons (16) accouplés aux récipients (10) respectifs en conséquence de ladite première étape de rétrécissement (214) après avoir libéré les manchons (16) desdits moyens de retenue (216, 218).

9. Procédé selon l'une quelconque des revendications précédentes, dans lequel ledit matériau film est un matériau thermorétrécissable.
